# EUROPEAN PATENT SPECIFICATION

(11) **EP 0 751 829 B1**
(45) Date of publication and mention of the grant of the patent: **27.09.2000**
(21) Application number: 94912255.0
(22) Date of filing: 18.03.1994
(51) Int. Cl.: B02C 19/12

(54) **PROCESS AND APPARATUS FOR RECYCLING DISPOSABLE DIAPERS**
VERFAHREN UND VORRICHTUNG ZUM RECYCLING VON WEGWERFWINDELN
PROCEDE ET APPAREIL DE RECYCLAGE DE COUCHES JETABLES POUR BEBE

(30) Priority: 15.03.1994 US 212935
(43) Date of publication of application: 08.01.1997
(73) Proprietor: DIA TEC RECYCLING TECHNOLOGIES, 47130 Ramat Hasharon (IL)
(72) Inventor: CINA, Yaron, 64391 Tel Aviv (IL); PARAG, Eitan, (IL)
(74) Representative: Joly, Jean-Jacques
(86) International application number: US9402949
(87) International publication number: WO9524967

(56) References cited:
- WO-A-92/07995
- DE-A- 2 703 063
- DE-A- 2 704 035
- DE-C- 3 214 294
- SE-A- 8 303 765
- US-A- 3 645 456
- US-A- 3 807 296
- US-A- 4 303 501
- US-A- 4 500 040
- US-A- 4 592 115
- US-A- 4 990 244
- US-A- 5 104 047
- US-A- 5 197 678

## Description

### BACKGROUND OF THE INVENTION

This invention relates to processes and apparatus for garbage recycling, more particularly, to a process and apparatus for processing used disposable diapers and other sanitary non-woven cellulose articles, to recover therefrom raw materials, such as cellulose and plastics in compacted form which raw materials can be converted into useful products. The invention is particularly aimed at recycling of used disposable diapers and separating the cellulose contents into a dry and compact product, and the plastic component into a reusable raw material.

For the sake of simplicity, reference will sometimes be made hereinafter to a diapers, but it should be understood that this term may equally refer to any other sanitary non-woven cellulose articles.

### DESCRIPTION OF THE PRIOR ART

The ecological impact of disposable diapers and other similar non-woven cellulose articles such as sanitary towels, panties, sick-bed undersheets and other hygiene products creates the need for efficient and economically feasible processes for decompositing the contents of these articles and separating their components for recycling. A child from his birth fill the age of 30 months uses approximately 6 disposable diapers a day. Each of the diapers has an average volume of 500 cc. Thus, one child produces an average of about 3000 cc of garbage a day, i.e. 21 liters a week and thus 1.092 cubic meters per year. There are about 50,000 diaper users per million population, so that during one day it is necessary to remove from a city of one million inhabitants 150 cubic m of such garbage.

Different attempts have been made to solve the problem of recycling of disposable diapers, napkins, hospital bed sheets, sanitary towels and other similar products. Practically, all these cellulose-containing articles have an envelope of a non-woven tissue, a plastics or rubber envelope, a cellulose-flock padding filling mixed, in most cases, with superabsorbent polymers which are capable of absorbing liquids up to 400 times their own volume.

The main idea was to recover the cellulose, which is the most valuable raw material and the plastics materials which create an ecological hazard.

Most of the prior art suggests one common process for separating the cellulose from the other materials of the rejected hygiene articles.

The following patents: DE 2704035, EP 91982, SE 8303765, DE 3214294, DE 2703063 describe processes including the following basic operations: disintegration (shredding, cutting) of the disposed articles, followed by separation of the cellulose fibers from the cover materials by screening.

DE 2704035 suggests that the cellulose fibers can be separated from the non-cellulosic materials by dry screening in one or more stages.

Other patents describe the mode of separation of the cellulose from the non-cellulose cover components by means of various machines (such as a perforated drum), applying suction to the drum surface and separating the cellulose mass. These patents describe suction means using ambient air.

US 4,592,115 describes a separator for separation of cellulose fibers, provided with perforations sufficiently large to permit the cellulose fluff fibers to pass therethrough, yet sufficiently small to screen out the larger non-fluff materials from the waste fibrous material. The balance between the tangential air flow rate and the differential pressure across the separator is sufficient to prevent blockage of the apertures in the separator by the waste fibrous material and to achieve the purpose of separation between the cellulose and non-cellulose materials.

Several specific units for recycling of disposable diapers are described in the above mentioned references.

SE 8303765 suggests a pneumotransporter for transporting the diapers onto a cylindrical perforated separator having an upper inlet and two lower outlets for releasing the waste products.

DE 3214294 describes the shredding of the diapers by rotating entrainers, which are arranged in an enclosed housing. The cellulose flock thus separated is removed from the housing under suction through a sieve. The shredded cover material is then removed separately.

EP 0180696 describes an apparatus in which a disintegrated material suspension is introduced tangentially into a separator, comprising a cylindrical housing having one inlet and two outlets. The cellulose separation is achieved by a perforated separation drum and air suction means, provided by a fan.

US 3,807,296 describes an apparatus for disposing of waste materials, wherein the waste materials are separated for either compacting or discharge into a sewage system. Prior to discharge, a portion of the waste products are crushed and stored in a container provided in the apparatus, which container is connected to the sewage system. The remaining portion of the waste materials or the non-decomposable waste material is separated in another compartment from that being crushed, so that it may be compacted and disposed of or forwarded to an appropriate treatment facility for possible recycling. However, recycling of the waste materials is not mentioned in this invention.

US 4,303,501 describes a process for the continuous separation of discarded hygiene articles into their components, namely flock and/or cut absorbent materials on the one hand and sheet coverings on the other, comprising first tearing the discharged hygiene articles into large pieces and then conducting such pieces over an oscillating sieve surface, preferably over an oscillating sieve device having decreasing mesh widths with the smallest mesh width being so selected that the flocculent and/or cut absorbent material still can fall through, while the large pieces of torn coverings are always carried off as sieve residues. It should be noted that no separation and disinfection of the flock stream is provided.

However, the main problem of the cellulose recycling from disposable diapers is not the separation from the elastic or tissue covers, but the separation of the cellulose media from the superabsorbent polymers incorporated in the diaper flock.

All the above described processes are relatively expensive and complicated, because they require installations having sieves, and dependent on compressed and heated air supplies and, therefore, can be utilized only for large-scale ''industrial" quantities of diaper garbage.

A further disadvantage of these processes is that the cellulose fibers are not effectively separated from the superabsorbent polymers, which results in the fact that cellulose recovered by the known methods is incompressible due to the presence of water-containing superabsorbent polymers.

Yet another disadvantage is that the processes described above provide cellulose and also plastics components, which cannot be used as such for further processing.

The apparatus used in the above mentioned processes suffer from corresponding disadvantages of complexity and high cost, and are unsuitable for household use. No safety means are provided to guard the user when charging, the used diapers into the processing machine. Moreover, no means are suggested for compacting the disintegrated diaper components; and converting them into raw materials for further use.

Document WO92/07995 discloses a process for the treatment of absorbent sanitary paper products to separate such products into components thereof in a form suitable for re-cycling or re-use. The process comprises the step of treating said products in at least one bath of an aqueous solution to remove particulate and/or soluble matter from the products. The bath is operated under conditions that are conductive to non-destructive separation of said products into components thereof. In preferred embodiments, the treated product thus obtained is treated with at least one aqueous washing solution and with at least one aqueous solution of at least one of bleaching agent and antimicrobial agent, and separate streams of plastic and cellulosic materials are recovered. The process results in the recovery of usable products from absorbent sanitary paper products.

### SUMMARY OF THE INVENTION

It is an object of the present invention to provide a process for recycling cellulose and plastics components of used disposable sanitary non-woven cellulose articles.

Another object of the present invention is to provide two types of apparatus for carrying out such a process, one adapted for recycling of relatively small quantities of the articles and suitable for household use, and the other adapted for continuous large-scale recycling and suitable for hospitals, and the like.

The above objects are achieved by the present invention providing a process for recovering a cellulose flock component of used disposable sanitary non-woven cellulose articles, preferably diapers, having also a plastics component and a superabsorbent polymer component, comprising: separating said cellulose flock component from said plastics component to provide a plastics-containing stream and a cellulose-containing stream;
characterized in that said process further comprises:
disintegrating said cellulose flock component in water into cellulose fibers, and separating said cellulose fibers from the water and the superabsorbent polymer component and other waste contained therein, by selectively collecting said cellulose fibers onto a rough surface; disposing said superabsorbent polymer component and waste in said water, as effluent; compacting said separated cellulose fibres prior to their discharge, and compacting said separated plastics component prior to discharge thereof

According to the preferred embodiment of this process, said diapers are sliced into preferably two parts, said parts are gripped by movable gripping means and moistened by repeated dipping, in water, with consequent separation of the cellulose flock component containing the superabsorbent polymer component from the plastics component of said diapers and further disintegration of said cellulose flock component in water into said cellulose fibres.

According to one modification of the process according to the invention, said repeated dipping of the split diapers in water is achieved by reciprocal rotation of said split diapers being at least half-immersed in the water, along a predetermined angle range of a horizontal circular trajectory.

More particularly, a plurality of the split articles or diapers are firstly gripped and displaced along said circular trajectory at a low velocity in one sense, then the split diapers are dipped into water by alternately displacing them in the two opposite senses at a high velocity along an angle ranging from 45° to 90° thereafter the plastics covers are released, displaced at a high velocity in one sense, and tangentially removed by suction for compacting thereof

It is also recommended to sprinkle by water the sliced diaper plastics covers being plastics component after their separation from the cellulose flock component and prior to their compacting.

According to one embodiment of the process, the separation of the cellulose flock fibers from the superabsorbent polymer component is performed by pouring the water containing the disintegrated cellulose fibers and the waste into a reservoir through a cylindrical screen having a rough inner surface and rotating in said reservoir at a low speed, whereby the cellulose fibers are entrained onto said rough inner surface; the water containing, the waste is then flushed from the reservoir and said screen is rotated reciprocally at a higher speed in a predetermined range of angles.

The cellulose fibers collected on the screen are preferably rinsed by sprinkling intermittently with water, or with a solution of a disinfectant.

The cellulose fibers collected on the inner surface of the screen are then scraped off by suitable means and moved upwards to the rim of the screen during, its fast rotation, which consequently causes said cellulose fibres to be tangentially discarded therefrom.

In the preferred embodiment of the invention, the above separation stage is preceded by a preliminary separation stage, which comprises collecting the fibers onto a rough surface of a body being at least partially immersed in the water and rotating at low speed about a horizontal axis; then flushing the water comprising the superabsorbent polymers and particles of solid waste, and discarding said cellulose fibers from said rough surface tangentially by rotating the rotatable body at high speed.

In an alternative embodiment of the invention, the cellulose fibers may be collected from the aqueous suspension by immersion of a rotatable brush into the water basin, rotating it there at a low speed, thus collecting the fibers on the bristles of the brush; said brush is then raised from the water basin and rotated faster, thus achieving the centrifugal removal of the fibers from the bristles, together with the water drops, towards a slotted cylindrical surface embracing, said raised brush; the cellulose fibers can be then scrapped off from said slotted surface and removed for further compacting.

In accordance with a preferred embodiment of the process according to the invention, the separated cellulose fibers are compacted by compressing them with simultaneous drying.

The compacting of the separated plastics-component can be performed by melting and subsequent cooling. Alternatively, the plasticscomponent may be compacted by compression and heating at its softening temperature.

The invention also concerns an apparatus for recovering a cellulose flock component of used disposable sanitary non-woven cellulose articles having also a plastics component and a superabsorbent polymer component, said apparatus comprising:
separation means for separating said cellulose flock component containing said superabsorbent polymer component, from said plastics component;
   characterised in that it further comprises:
disintegration means comprising a water basin, for disintegrating the thus separated cellulose flock component into cellulose fibres, superabsorbent polymer gel and waste, and dispersing said fibres in water;
collecting means including an element having a rough surface for selectively collecting thereon said cellulose fibres from their aqueous dispersion;
compacting means for compacting said cellulose fibres collected by said collecting means;
compacting means for compacting said plastics component, and disposal means for removal of the water containing said superabsorbent polymer gel and waste from said water basin.

Two modifications of the apparatus according to the invention carrying out the inventive process will be further described by the aid of the attached non-limiting drawings.

### BRIEF DESCRIPTION OF THE DRAWINGS

Fig-. 1 is a block-diagram of the process according to the invention.
Fig. 1A is a modification of the block-diagram shown in Fig. 1.
Fig. 2 is a general isometrical view of a family-use machine accomplishing the process according to the invention.
Fig. 3 is an exploded view of a safe lid unit of the machine shown in Fig.2
Figs. 4A and 4B are a vertical and a horizontal cross-sectional views of splitting means of the machine shown in Fig.2.
Fig. 5 is a schematical perspective view of a movable clips mechanism of the machine shown in Fig.2.
Fig.6 is a vertical cross-sectional view of a cellulose flock collecting unit of the machine shown in Fig.2.
**Fig. 7** is a longitudinal cross-sectional view of the cellulose fibers compacting element.
**Fig. 8** illustrates a hollowed conical heated element for the processing of the plastic covers of the cellulose articles.
**Fig. 9** is a schematical exploded view of a part of a large-scale apparatus according to an embodiment of the invention.
**Fig. 10** is an enlarged axial cross-sectional view of the feeder and the slicing means of Fig. 9, along line "10-10" in Fig. 9.
**Fig. 11A** is a schematic enlarged top view of the separating (dipping) means of Fig. 9.
**Fig. 11B** is a schematic enlarged axial cross-sectional view of the separating (dipping) means of Fig. 9, along line "B-B" in Fig. 11A.
**Fig. 12** is a schematic cross-sectional view of an optional preliminary collecting unit for collecting the disintegrated cellulose fibers from water.
**Fig.13A** is a schematic horizontal cross-sectional view of the main collecting means which may be combined with the apparatus of Fig. 9.
**Fig. 13B** is a schematic axial cross-sectional view of the main collecting means whicn can be incorporated with the apparatus of Fig. 9.

### DETAILED DESCRIPTION OF THE PREFERRED EMBODIMENTS

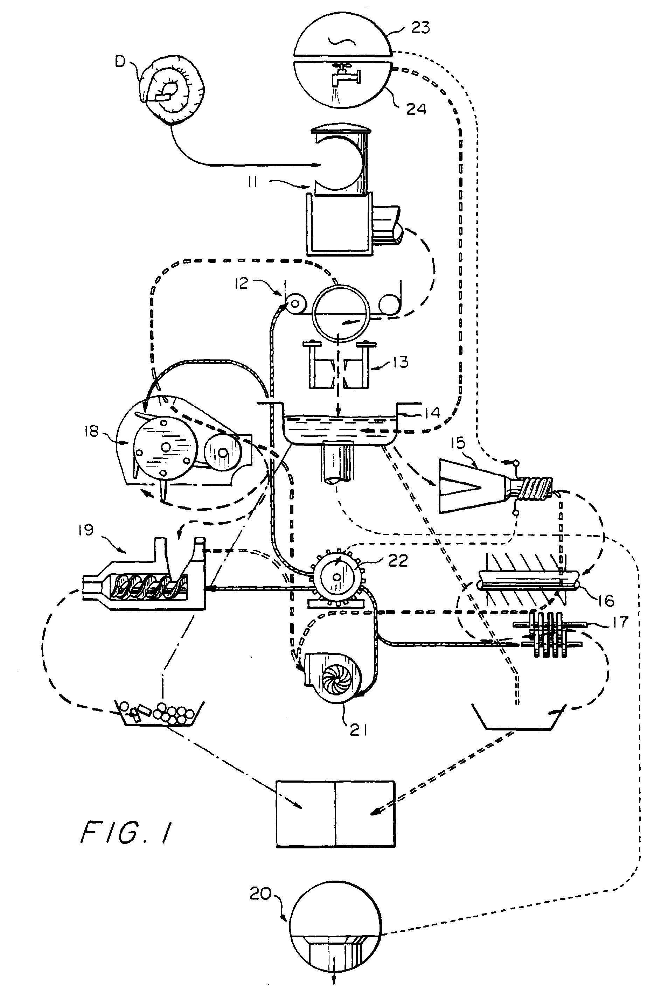

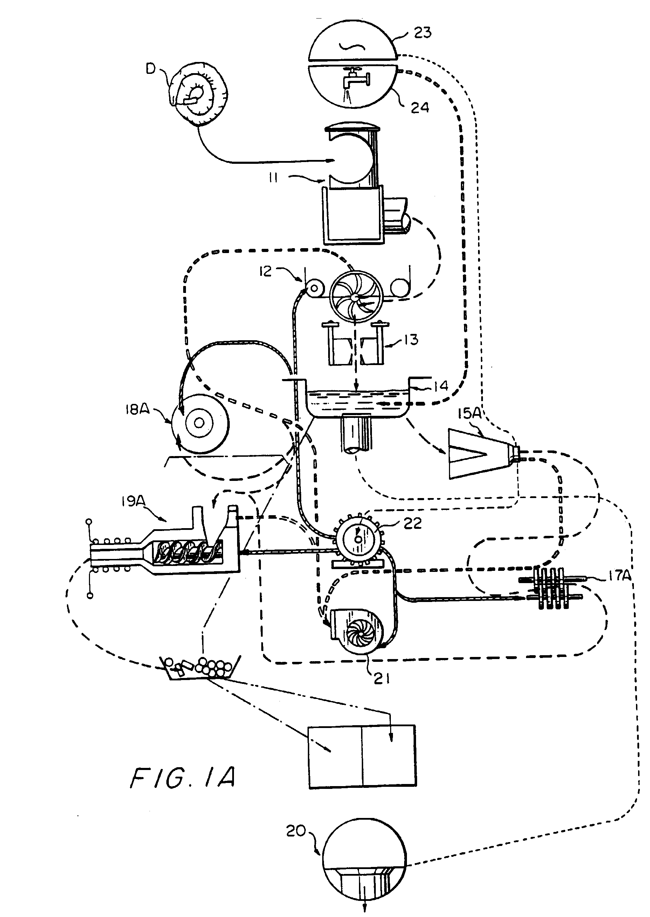

In Fig. 1 one can see the main sequence of operations of the process according to the invention; these operations are performed by components of a family-use machine.

The disposable diaper D or any non-woven cellulose article is introduced into the machine through a safe lid unit 11. Then the diaper is split by a saw illustrated in unit 12. The two parts of the diaper are held by clips 13, which move up and down over the surface of water in a water basin 14, the diaper parts are moistened and separated into two streams: a cellulose and plastic stream. The plastic stream is then removed to a melting element 15 from where the melted plastic is transferred to a cooling unit 16 and then to a discharging and compacting unit 17, which includes a shredding device.

The cellulose stream, separated from the diaper, disintegrates in the water basin 14, where the superabsorbent polymers and waste effluents are carried away by the water; the cellulose flock is collected by a collecting unit 18, which comprises a doffer having a rough surface formed by a hard nap fabric, such as a non-woven abrasive fabric; and the liquid effluent is pumped away from the water basin 14 to the sewage system 20, while fresh water is consequently added into the water basin 14. The moistened cellulose flock, separated in unit 18, is compacted by a compacting unit 19, which comprises a screw and provides compression, disinfection and drying of the cellulose flock before discharging.

A blower 21 is provided to create suction into all the operational units (the blower connections are shown by light cut double lines). The blower may be provided with air purifying means such as an active carbon filter.

An electric motor 22 is provided to drive all the moving parts of all the operational units (the motor connections are shown by thick double lines).

Conventional sources of electricity 23 and water 24 are indicated by their schematic connections.

Dark cut lines show the sequence of the process operations, performed by the specific units. In other embodiments of the process some units could be omitted or differently designed.

In Fig. 1A one can see that several operations of the process in the final step are changed, and some machine components are modified (15A, 18A, 19A) and unified (19A). The plastic stream passes through the conical non-heated receiver 15A and is then shredded by a shredding unit 17A and directed by suction to the compacting unit 19A. The unit 19A is provided with a heating element and is intended to compact and disinfect the cellulose flock and the plastic stream in consequent operations.

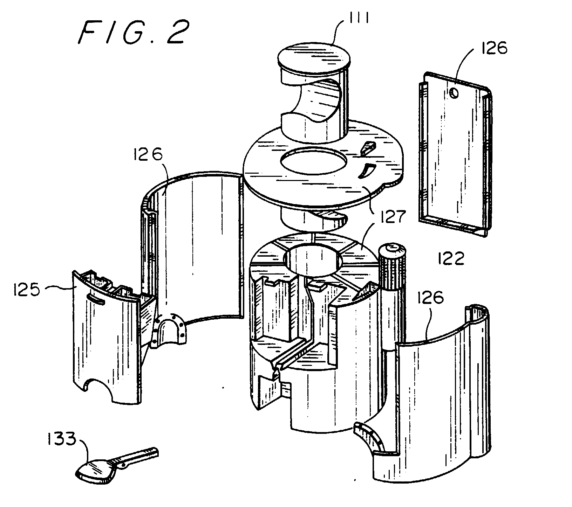

In Fig. 2 one can see a general view of the family-use machine, accomplishing the process described above. A safety lid 111, a motor 122, a pedal 133, discharging reservoirs 125 for cellulose and plastic obtained in the separation process, cover housing panels 126 and the main core body 127 including the splitting unit, the plastic and cellulose separating units, the water basin, and the cellulose and plastic compacting units of the machine (not indicated in detail).

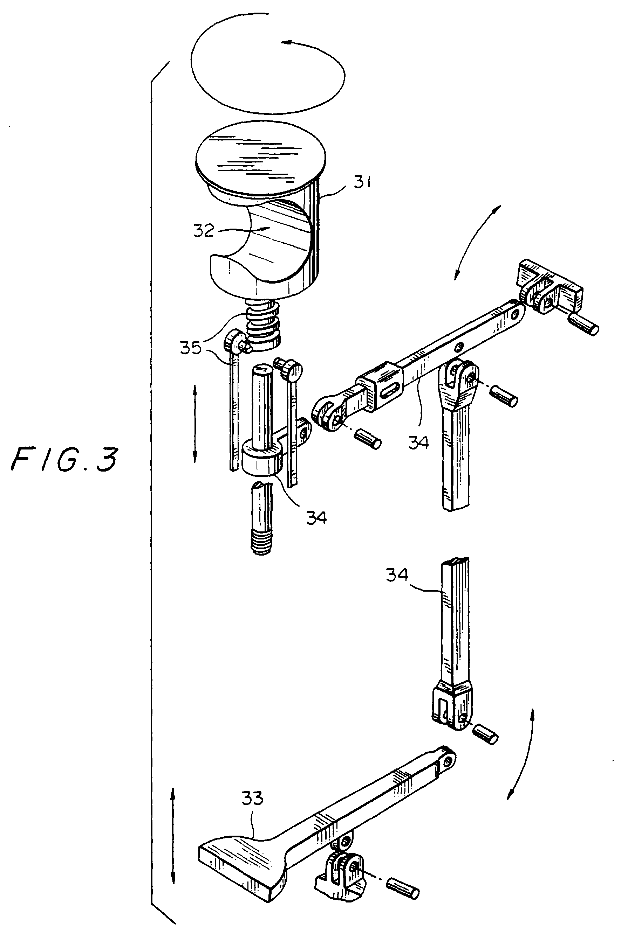

In Fig. 3 the safe lid unit comprises a cylindrical lid 31, having an orifice 32 and the lid 31 is attached to a pedal 33 by a connecting mechanism, which includes raising means 34 and turning means 35. The diaper or any other cellulose article may be introduced into the orifice 32, when the lid 31 is raised by the movable connecting levers of the means 34, applied by the pedal 33. After loading the diaper, the lid 31 turns towards the entry of the splitting unit (not seen) of the machine to unload the diaper and simultaneously the entry orifice 32 is turned by means of the screw 35 to protect the user's hand from any movable parts of the machine.

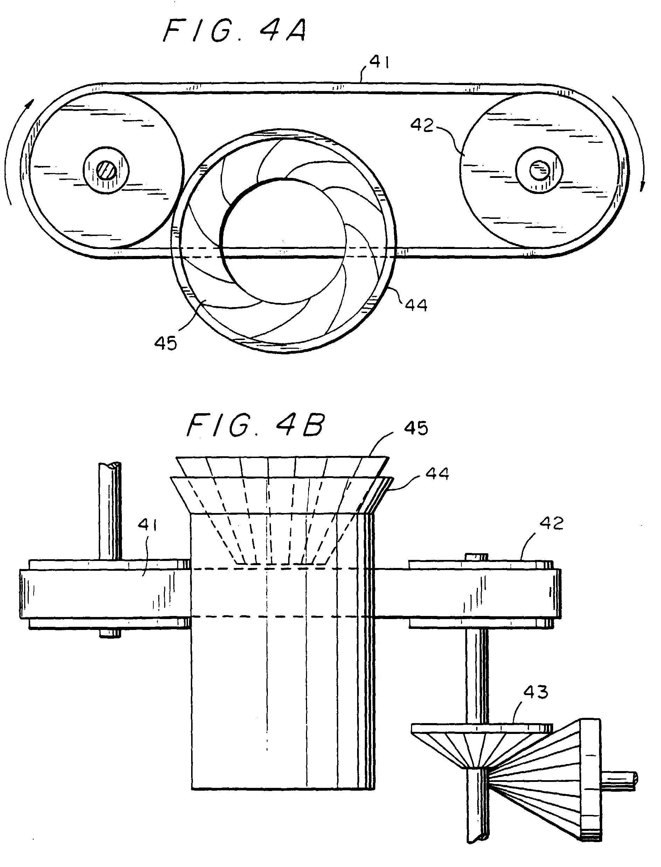

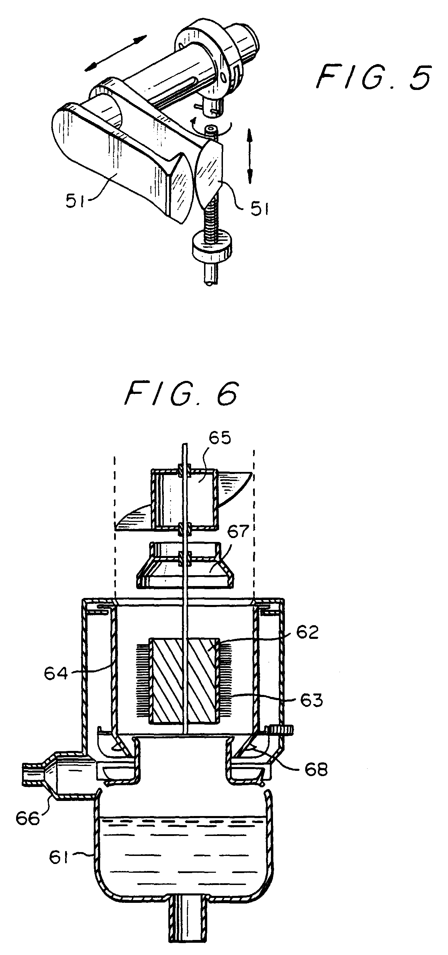

Fig. 4A illustrates a horizontal cross-sectional view of the slicing unit, and Fig.4B a vertical cross-sectional view thereof. The slicing unit comprises an endless saw belt 41, rotating around two wheels 42, one of which is driven by a gear wheel 43. The saw belt 41 is located at the outlet position 44 of the lid unit described in Figure 3 above. A flexible frustoconical guide 45 is intended for transferring the diaper by suction directly towards the saw belt 41. When reaching the saw belt 41, the diaper is sliced and transferred to the movable clips described below in Figure 5.

Fig. 5 illustrates a perspective view of a pair of movable clips 51 of a separation unit. The clips 51 are adapted to perform a horizontal reciprocal "gripping and releasing" movement (along a horizontal arrow), and a vertical reciprocal "dipping" movement ( along a vertical arrow). The separation unit includes two opposite pairs of operated movable clips 51, located above a water basin (not seen). When clips 51 grab any part of the diaper split by the saw 41, they start to move up and down thus dipping the split diaper into water, till the cellulose flock becomes moist and separates from the plastics cover of the diaper.

Fig. 6 illustrates one embodiment of the collecting unit for gathering cellulose fibers from water suspension. The unit comprises a brush 62 provided with bristles 63 and rotatable at two different speed rates and movable up and down in a water basin 61; and comprises a rotatable coaxial slotted cylinder 64 having a diameter larger than the diameter of the brush 62.

When the brush 62 rotates at the lower speed while being immersed in the water basin 61, the bristles 63 collect the cellulose flock. When the brush 62 is raised from the water basin 61, it is rotated at the faster speed, and the cellulose flock and water drops are centrifuged from the bristle 63 towards the internal surface of the slotted cylinder 64. The water then flows down to the basin 61, and the cellulose flock is scraped off from the internal surface of the slotted cylinder 64 by a scraper 65, mounted coaxially with the brush, and is then transferred out of the unit through a channel 66. A lid 67 is provided to separate the water basin from the scraper 65. The rotatable slotted cylinder 64 can be additionally provided with a blower 68, in order to create suction.

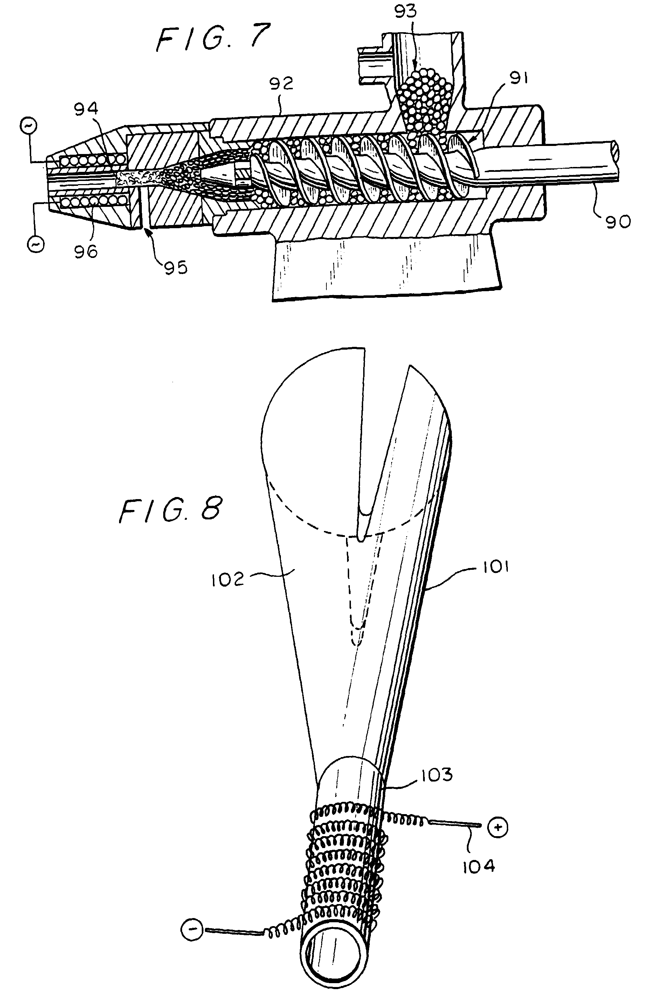

In Fig. 7 the cellulose compacting unit comprises an endsless screw 90, moving in a groove 91 of a housing 92. The housing 92 has a cellulose inlet 93 and a narrow outlet 94, provided by a liquid passage 95. When the cellulose flock is drawn into the inlet 93 by suction, the rotating screw 90 compresses the cellulose flock, thus dries it simultaneously. The housing 92 is provided with an optional heating electrical clement 96. Such a heated compacting unit can compress and disinfect the cellulose flock or the plastic cover parts in its outlet channel 95. The mass, situated in the outlet channel 95, which has a diameter of about 25 mm, should be heated in 150°C for 5 min.

Fig. 8 illustrates the construction of a conical hollowed heated element 101 for processing the plastic stream as it comes off the moving clips (not seen). The element 101 consists of a conical hollowed receiving part 102, attached to a hollowed cylindrical part 103, coiled by a heating electrical element 104. According to the process illustrated in Fig. 1, the plastic cover parts of the disposable diaper or other cellulose articles are accumulated in the conical part 102 and then melted in the cylindrical part 103 as a result of the heating, caused by the heating element 104. The melted plastic mass is transferred to a cooling unit prior discharge. The conical hollowed element, can be modified for the process, illustrated in Fig.1A, namely it can be manufactured without the heating element 104 and be directly connected by suction to the shredding unit 17A, and then to the cellulose flock compacting heated element 19A (see Fig. 1A).

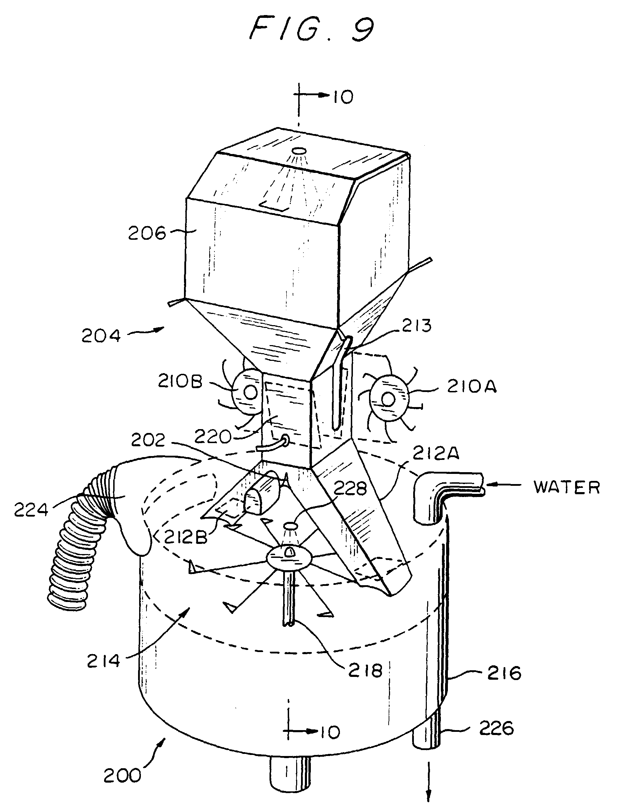

As seen in Fig. 9 the apparatus 200 according to this embodiment of the invention, being specifically adapted for continuous large-scale recycling of disposable sanitary non-woven cellulose articles, particularly diapers, comprises a feeder 204 in the form of a hopper 206 for storing the articles, merging at its lower end into a duct 208 provided with feed advancing means 210A, 210B for delivering the articles to slicing means 202 disposed in duct 208 for splitting the articles before their separation. After passing the slicing means 202, the duct 208 branches into a pair of sleeves 212A 212B open at their lower ends, and intended for feeding the split articles to a separating unit 214 generally comprising a water basin 216 and a carousel-like member 218 provided with a plurality of radial beams 217 and having the following tasks:
- loading thereon the split articles by extracting them from the lower openings of the sleeves 212A, 212B;
- moistening the split articles by repeatedely dipping them in the water in basin 216, with consequent separation of the cellulose flock therefrom and disintegration of the flock in the water.

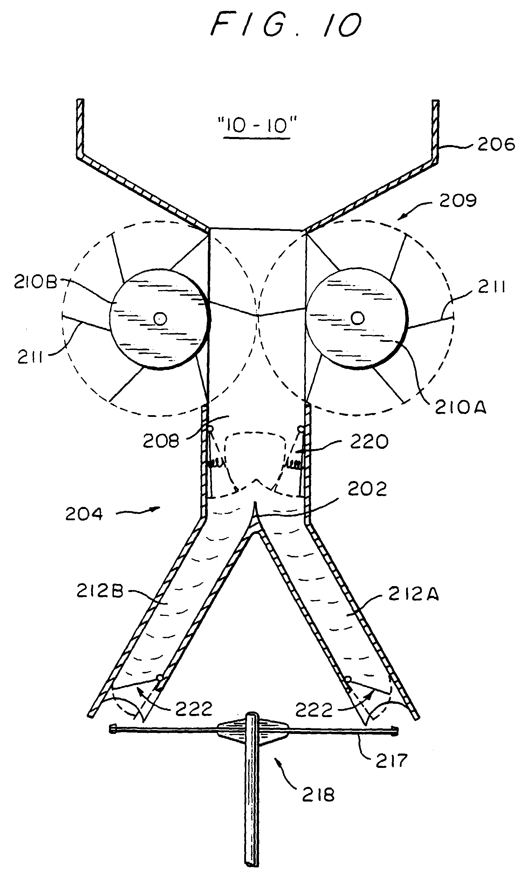

Fig. 10 illustrates in detail the feeder 204 provided with the feed advancing means 209 consisting of a pair of cooperating rollers 210A, 210B having projecting spikes 211 symmetrically mounted at opposite sides of the duct 208 and partially penetrating thereinto through a pair of oppositely located slots 213 ( see Fig.9) provided in the duct 208. The rollers 210A, 210B rotate in opposite senses, so as to push the diapers from the hopper downwards one after the other.

The duct 208 is provided with means 220 for adjusting the cross section of the duct to the size of the diapers transported therethrough in order to center them on the slicing means 202 so as to enable them to be split into two substantially equal parts. The adjusting means 220 may consist, for example, of leave springs in the form of spring biased plates or the like.

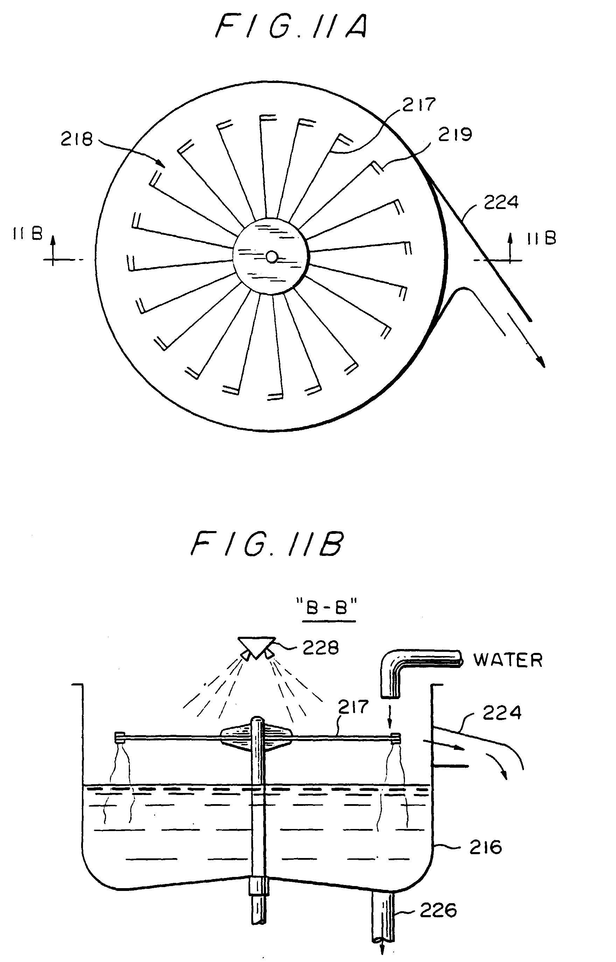

The slicing means 202 consists of a pair of closely adjacent parallel blades reciprocally movable in opposite directions. The blades are continuously sprinkled by water from a sprinkler (228 in Fig. 11B) for facilitating the cutting operation. The sleeves 212A, 212B are provided at their lower openings with leave springs 222 for preventing the split diapers from falling out of the sleeves before they are gripped by the radial beams 217 of carousel-like member 218.

As shown in Figs. 10, 11A and 11B, the carousel-like rotatable member 218 of the separation means 214 is positioned below the lower openings of the sleeves 212 A, 212B and above the water surface in the water basin 216, and is spaced from this surface by a distance less than the minimal dimension of a split diaper. The radial beams 217 of the carousel-like member 218, each provided at its outer end with gripping means 219 (for example, hooks) adapted to continuously extract the split diapers out of the sleeves 212A, 212B during a first, slow mode of rotation of the carousel-like member 218.

The carousel member 218 thus loaded with the split diapers, starts to perform a second, fast mode of reciprocal partial rotations along an angle of, say, about 45°, so as to repeatedly dip the gripped split diapers into the water and moisten them. This consequently causes the cellulose flock to separate from the plastics covers and to drop into the water. The empty plastics covers, which are retained by the gripping means 219, may now be released from the gripping means 110 and discarded into a plastics-containing stream, which may be achieved by means of a third, fast mode of rotation of the carousel-like member 218 with simultaneous suction. For discarding the plastics-containing stream, the water basin 216 is provided with an upper outlet duct 224, located at the level of the radial beams 217 of carousel-like member 218. Before their removal, the plastics covers are rinsed by a water sprinkler 228 positioned above the carousel-like rotatable body 218. It should be noted that a disinfectant solution may be also introduced to the water basin by the sprinkler 228.

A lower outlet duct 226 provided at the bottom of the basin 216 serves for the removal of the aqueous effluent containing the disintegrated cellulose fibers, for its further treatment.

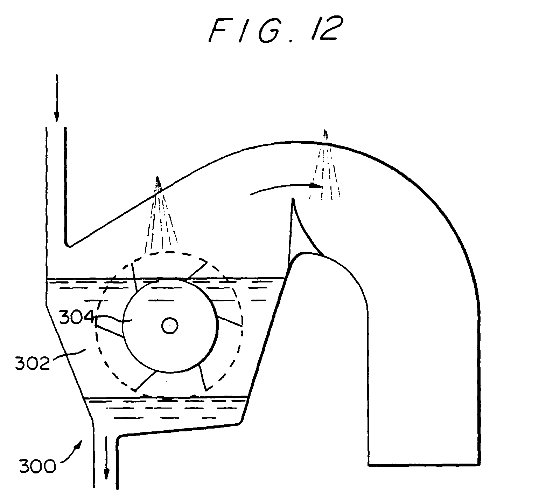

An optional preliminary collecting unit 300, which can advantageously be added to the apparatus shown of Fig.9, is illustrated in cross-section in Fig. 12. The aqueous effluent containing the disintegrated cellulose fibers is conveyed from the basin 216 via the duct 226 (Fig. 9 and 11B) to an intermediate water container 302, housing a rotational body 304 having a rough surface (for example, a brush) and being partially immersed in the water. The body 304 is rotatable about a horizontal axis at two different speeds: a slower mode of rotation during which the cellulose fibers are collected from the water onto the bristles of the brush 304, and a faster mode of rotation of the brush 304 during which the collected fibers are tangentially discarded therefrom. The latter operation is performed after the aqueous effluent, depleted of the fibers, has already been flushed out of the container 302, thereby removing from the cellulose flock the solid waste particles and some amount of the superabsorbent polymer gel contained in the effluent.

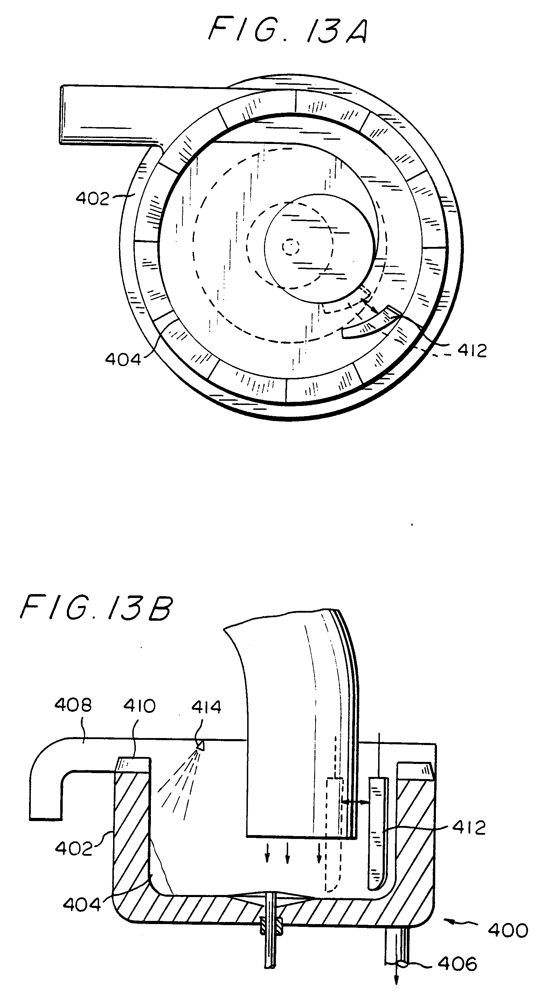

The wet cellulose fibers, after being discarded from the bristles of the brush 304, are transferred to the main collecting means shown in Fig.13A, 13B.

As seen in Figs. 13A and 13B, the main collecting means 400 of the apparatus of Fig. 9. comprises a cylindrical reservoir 402 provided with an internal rotatable cylindrical screen 404, both located below and coaxially with the water basin 216 containing the carousel-like member 218 (Fig.11B). The reservoir 402 is provided with a lower outlet pipe 406 and an upper tangential outlet pipe 408 positioned at the level of the upper edge of the screen 404. The screen 404 serves either for receiving the wet cellulose fibers, together with some of the superabsorbent polymer component which is still retained thereon, from the optional intermediate collecting means 300 or (in the absence of such intermediate collecting means) for receiving the aqueous effluent containing the disintegrated cellulose fibers directly from the water basin 216. The screen 404 has a rough inner surface and is reciprocally rotatable in opposite senses along various angles and at various velocities according to a predetermined regime. During a first, slow mode of rotation of the screen 404, its vertical wall collects on its inner rough surface the cellulose fibres from their suspension in water. The cylindrical screen 404 has an outwardly flared upper edge 410 and is further equipped with a curved scraper 412 adapted to scrape off the fibers from the rough inner surface of the vertical screen wall, during a second, fast mode of rotation of the screen 404, and to displace the collected cellulose fibers upwards along the inner screen wall to its flared upper edge 410 from which the fibers are removed by suction via the tangential outlet pipe 408 and then transported to subsequent drying and compacting stations.

A water sprinkler 412 is positioned above the screen 404 for intermittent washing of the cellulose fibers collected on its internal rough surface.

## Claims

1. A process for recovering a cellulose flock component of used disposable sanitary non-woven cellulose articles, having also a plastics component and a superabsorbent polymer component, said process comprising:
separating said cellulose flock component from said plastics component to provide a plastics-containing stream and a cellulose-containing stream; characterised in that it further comprises:
disintegrating said cellulose flock component in water into cellulose fibres, and separating said cellulose fibres from the water and the superabsorbent polymer component and other waste contained therein, by selectively collecting said cellulose fibres onto a rough surface;
disposing said superabsorbent polymer component and waste in said water, as effluent;
compacting said separated cellulose fibres prior to their discharge, and compacting said separated plastics component prior to discharge thereof.

2. The process according to claim 1, wherein said disposable sanitary non-woven cellulose articles are diapers.

3. The process according to claim 1 or 2, wherein said articles are sliced into preferably two pans, said pans are gripped by movable gripping means (13, 51) and moistened by repeated dipping in water, with consequent separation of the cellulose flock component containing the superabsorbent polymer component from the plastics component of said diapers and further disintegration of said cellulose flock component in water into said cellulose fibres.

4. The process of claim 3, wherein said repeated dipping of the split articles in water is achieved by reciprocal rotation of said split diapers being at least half-immersed in the water, along a predetermined angle range of a horizontal circular trajectory.

5. The process according to claim 4, wherein a plurality of the split articles are firstly gripped and displaced along said circular trajectory at a low velocity in one sense, then the split diapers are dipped into water by alternately displacing them in opposite senses at a high velocity along an angle ranging from 45° to 90°, thereafter the plastics covers are released, displaced at a high velocity in one sense, and tangentially removed by suction for compacting thereof.

6. The process according to any of claims 1 to 5, wherein said compacting of said separated cellulose fibres comprises compressing and simultaneous drying and disinfection of said fibres by heating thereof

7. The process according to any of claims 1 to 6, wherein said plastic component is compacted by melting and subsequent cooling.

8. The process according to any of claims 1 to 6, wherein said plastic component is compacted by compressing and heating at its softening temperature.

9. Apparatus for recovering a cellulose flock component of used disposable sanitary non-woven cellulose articles having also a plastics component and a superabsorbent polymer component, said apparatus comprising:
separation means (12, 13, 14, 51, 214) for separating said cellulose flock component containing said superabsorbent polymer component, from said plastics component;
characterised in that it further comprises:
disintegration means comprising a water basin (14, 61, 216), for disintegrating the thus separated cellulose flock component into cellulose fibres, superabsorbent polymer gel and waste, and dispersing said fibres in water;
collecting means (18, 18A, 300, 400) including an element (304, 404) having a rough surface for selectively collecting thereon said cellulose fibres from their aqueous dispersion;
compacting means (19, 19A) for compacting said cellulose fibres collected by said collecting means;
compacting means (17, 19A) for compacting said plastics component, and disposal means for removal of the water containing said superabsorbent polymer gel and waste from said water basin.

10. Apparatus in accordance with claim 9, specifically adapted for small-scale recycling of used sanitary non-woven cellulose articles, comprising a safety lid (11, 111) for introducing said cellulose articles into the apparatus, in order to protect the user's hand from any movable parts, and slicing means for slicing said articles upstream of said separating means.

11. Apparatus according to claim 10, wherein said safety lid comprises a cylindrical body having an orifice (32) through which said cellulose articles are introduced; which cylindrical body is attached to a pedal (33, 133) by connecting, raising and turning means (34, 35) for causing said lid to rise so as to permit introduction of the cellulose article into said orifice, whereafter the lid is retracted into the apparatus and rotated simultaneously.

12. Apparatus in accordance with claim 10 or 11, wherein said slicing means are placed under said lid and comprise an endless saw belt (41) and a flexible frusto-conical guide tube (45) for transferring said diapers from said lid towards said saw belt, said guide tubes having a smaller orifice and a larger orifice wherein said smaller orifice faces towards said saw belt.

13. Apparatus in accordance with any of claims 9 to 12, wherein said separation means comprise movable clips (13, 51) for gripping the plastic cover parts of said cellulose articles; dipping them into water and transferring the plastics covers after separation thereof from the cellulose component, to further compacting and discharging.

14. Apparatus according to any of claims 9 to 13, wherein said cellulose flock collecting unit comprises a rotatable cylindrical brush (62); a coaxial slotted cylinder (64) embracing said brush; and scraping means (65); said brush being adapted for immersion and rotation in said water basin (61) for gathering said cellulose fibres from the water onto bristles (63) of said brush; said brush being raisable from said water basin for further unloading said cellulose fibres therefrom.

15. Apparatus according to claim 14, wherein said brush is able to rotate at two different rates; and said coaxial slotted cylinder has a diameter larger than the diameter of said brush; so that when said brush rotates slowly while being immersed in said water basin, said bristles collect said cellulose fibres from said water; and when said brush is raised from said water basin and is rotated faster, said cellulose fibres together with the water drops are centrifuged away from said bristles (63) towards the internal surface of said slotted cylinder (64); from which they are subsequently scraped off by said scraping means (65).

16. Apparatus in accordance with claim 14 or 15, wherein said scraping means are in the form of an additional coaxial cylinder adapted to be introduced and rotated in said slotted cylinder, and being provided on its side surface with a curved flexible strip adapted to be pressed towards the inner surface of said slotted cylinder.

17. Apparatus according to any of claims 9 to 16, wherein said compacting means of said cellulose fibres comprises a rotatable screw feeder means (90) for compacting said cellulose fibres and creating an elevated temperature thus providing disinfection and drying of said cellulose flock; said rotatable screw feeder is additionally provided with heating means (96).

18. Apparatus according to any of claims 9 to 17, further comprising a blower means (21) for creating suction for pneumatic transferring of said cellulose articles and their components from one of said units to another, said blower being provided with air purifying means.

19. Apparatus in accordance with claim 9, specifically adapted for continuous large-scale recycling of used disposable sanitary non-woven cellulose articles discarded from medical, educational and welfare institutions, further comprising a slicing means (202) for splitting said articles into two parts before their separation in said separation means (214), and a feeder (204) for continuously passing said cellulose articles through said slicing means.

20. Apparatus in accordance with claim 19, wherein said feeder comprises a hopper (206) for storing the diapers, merging at its lower end into a duct (208) provided with feed advancing means (210A, 210B), and leading to said slicing means (202); said duct thereafter branching into a pair of sleeves (212A, 212B) open at their lower ends for feeding the split articles to said separating means (214).

21. Apparatus in accordance with claim 20, wherein said feed advancing means consists of a pair of co-operating adjacent rollers (210A, 210B, 211) mounted in said duct side by side and rotating in opposite senses, so as to push said articles downwards one after another.

22. Apparatus in accordance with claim 20 or 21, wherein said duct (208) is provided with means (220) for adjusting its cross-section to the size of the articles being transported therethrough, in order to centre said articles on said slicing means (202) so as to enable them to be split into two substantially equal parts.

23. Apparatus in accordance with any one of claims 19 to 22, wherein said slicing means (202) comprises a pair of closely adjacent parallel movable blades adapted to perform reciprocative movements in opposite directions and continuously sprinkled by water.

24. Apparatus in accordance with any of claims 20 to 22, wherein said sleeves are provided at their lower openings with leave springs (222) for preventing said split articles from falling out of said sleeves.

25. Apparatus in accordance with any of claims 19 to 24, wherein said separation means comprises a carousel-like, horizontally rotatable member (218) positioned beneath the lower openings of said sleeves and above the water surface in said water basin, and being spaced from the water surface by a distance less than the minimal length of a split article; said carousel-like member being reciprocatively rotatable along various angles and at various velocities according to predetermined regimes, and comprises a plurality of radial beams (217) each provided at its outer end with gripping means (219) adapted to extract the split articles from said sleeves when said carousel member is rotated in one of the predetermined regimes; and said water basin being provided with a first outlet duct (224) at the level of said carousel-like member (218) for removal therefrom of the plastics covers of said split articles, and a second outlet duct (226) for removing from said water basin the water together wit the effluent and the cellulose fibres disintegrated therein to said collecting means.

26. The apparatus in accordance with claim 25, further provided with water sprinkling means (228) positioned above said carousel-like rotatable body and adapted for injecting either water or disinfectant solution.

27. The apparatus according to any of claims 9 to 26, wherein the collecting means (400) comprise a cylindrical reservoir (402) provided with a coaxial internal cylindrical screen (404), having a rough internal surface, reciprocally rotatable in opposite senses along various angles and at various velocities according to predetermined regimes; said cylindrical screen serving for collecting on its rough internal surface the disintegrated cellulose fibres from the water, which contains them together with the superabsorbent polymer, during slow rotation of said screen; said reservoir (402) being provided with a lower outlet pipe (406) for removing the aqueous effluent to a sewer, and an upper tangential outlet pipe (408) positioned at the level of the upper edge (410) of said screen which is outwardly flared; said apparatus being further equipped with a curved scraper (412) adapted to scrape off the collected cellulose fibres from the rough internal surface of said cylindrical screen towards its flared upper edge during fast rotation of the screen, for removal of the fibres by suction via said tangential pipe (408).

28. The apparatus in accordance with claim 27, further provided with at least one water sprinkler (412) positioned above said cylindrical screen for intermittent washing of the cellulose fibres collected on the rough surface of said screen.

29. Apparatus according to claim 27 or 28, preceded by a preliminary collecting unit (300) comprising a container (302) with water containing said disintegrated cellulose fibres and the effluent, said container being provided with a body (304) having a rough surface and being at least partially immersed in the water, said body being rotatable at two different speeds about a horizontal axis, so as to either collect said cellulose fibres from the water onto said rough surface during a slower rotation of said body, or to tangentially discard the collected fibres therefrom during a faster rotation of the body, after the water with the effluent has already been flushed from the container.

30. The apparatus in accordance with any of claims 9 to 29, further provided with means adapted to apply a lowered air pressure at all inlet and outlet openings of the apparatus in order to prevent escape of unpleasant odours therefrom.

## Patentansprüche

1. Verfahren für die Rückgewinnung eines Flockzellstoff-Bestandteiles von gebrauchten wegwerfbaren sanitären Artikeln aus nicht-gewebtem Zellstoff, die einen Kunststoff-Bestandteil und einen superabsorbierenden Polymer-Bestandteil auch enthalten, wobei das Verfahren:
die Trennung des Flockzellstoff-Bestandteiles vom Kunststoff-Bestandteil zur Bildung eines Kunststoffe enthaltenden Stromes und eines Zellstoff enthaltenden Stromes umfasst,
dadurch gekennzeichnet, daß es:
den Zerfall des Flockzellstoff-Bestandteiles im Wasser zu Zellstoff-Fasern, und die Trennung der Zellstoff-Fasern vom Wasser, vom superabsorbierenden Polymer-Bestandteil und von anderen im Wasser enthaltenen Abfällen durch selektives Sammeln der Zellstoff-Fasern auf eine rauhe Oberfläche;
das Anordnen des superabsorbierenden Polymer-Bestandteiles und der Abfälle im Wasser als Ausströmung;
die Kompaktierung der getrennten Zellstoff-Fasern vor deren Ausscheidung, und
die Kompaktierung des getrennten Kunststoff-Bestandteiles vor dessen Ausscheidung
weiter umfaßt.

2. Verfahren nach Anspruch 1, worin die wegwertbaren sanitären Artikel aus nicht-gewebtem Zellstoff Windeln sind.

3. Verfahren nach Anspruch 1 oder 2, worin die Artikel in vorzugsweise zwei Teile durchgeschnitten werden, die Teile von beweglichen ergreifenden Mitteln (13, 51) ergriffen und durch wiederholtes Eintauchen ins Wasser befeuchtet werden, mit daraus folgender Trennung des Flockzellstoff-Bestandteiles, der den superabsorbierenden Polymer-Bestandteil enthält, vom Kunststoff-Bestandteil der Windeln und weiterem Zerfall des Flockzellstoff-Bestandteiles im Wasser zu Zellstoff-Fasern.

4. Verfahren nach Anspruch 3, worin das wiederholte Eintauchen der durchgeschnittenen Artikel ins Wasser durch gegenseitige Drehung der, im Wasser wenigstens halbeintauchenden durchgeschnittenen Windeln, in einem vorbestimmten Winkel-Bereich einer waagerechten kreisförmigen Bahn erreicht wird.

5. Verfahren nach Anspruch 4, worin eine Mehrzahl von durchgebrochenen Artikeln zuerst ergriffen und an der kreisförmigen Bahn bei niedriger Geschwindigkeit in einer Richtung verschoben wird, die durchgebrochenen Windeln dann ins Wasser eingetaucht werden, indem sie abwechselnd in entgegengesetzten Richtungen bei hoher Geschwindigkeit entlang einem Winkel zwischen 45° und 90° verschoben werden, wonach die Kunststoff-Decken befreit, bei einer hohen Geschwindigkeit in einer Richtung verschoben und tangential durch Saugen zur Kompaktierung entfernt werden.

6. Verfahren nach einem der Ansprüche 1 bis 5, worin die Kompaktierung der getrennten Zellstoff-Fasern das Zusammenpressen und die gleichzeitigen Trocknung und Desinfektion der Fasern durch Heizen umfaßt.

7. Verfahren nach einem der Ansprüche 1 bis 6, worin der Kunststoff-Bestandteil durch Schmelzen und nachfolgendes Abkühlen kompaktiert wird.

8. Verfahren nach einem der Ansprüche 1 bis 6, worin der Kunststoff-Bestandteil durch Zusammenpressen und Heizen bei dessen Erweichungstemperatur kompaktiert wird.

9. Apparat für die Rückgewinnung eines Flockzellstoff-Bestandteiles aus gebrauchten wegwertbaren sanitären Artikeln aus nicht-gewebtem Zellstoff, die einen Kunststoff-Bestandteil und einen superabsorbierenden Polymer-Bestandteil auch enthalten, welcher:
Trennungsmittel (12, 13, 14, 51, 214) für die Trennung des Flockzellstoff-bestandteiles, der den superabsorbierenden Polymer-Bestandteil enthält, vom Kunststoff-Bestandteil umfasst,
dadurch gekennzeichnet, daß es:
Zerfallsmittel, die für das Zerfallen des so getrennten Flockzellstoffbestandteiles zu Zellstoff-Fasern, einem superabsorbierenden Polymer-Gel und Abfällen und für das Verstreuen der Fasern im Wasser eine Wasser-Schüssel (14, 61, 216) umfassen;
sammelnde Mittel (18, 18A, 300, 400) einschließlich eines Elementes (304, 404) mit einer rauhen Oberfläche für das selektive Sammeln der Zellstoff-Fasern aus deren wässerigen Dispersion;
Kompaktierungsmittel (19, 19A) für die Kompaktierung der von den sammelnden Mitteln gesammelten Zellstoff-Fasern;
Kompaktierungsmittel (17, 19A) für die Kompaktierung des Kunststoff-Bestandteiles und Beseitigungsmittel für die Entfernung des, das superabsorbierende Polymer-Gel und die Abfälle enthaltenden Wassers aus der Wasser-Schüssel
weiter umfaßt.

10. Apparat nach Anspruch 9, für die kleinangelegte Wiederverwertung von gebrauchten sanitären Artikeln aus nicht-gewebtem Zellstoff spezifisch angepasst, mit einem Sicherheitsdeckel (11, 111) für das Einführen der Zellstoff-Artikel in den Apparat, um die Hand des Benutzers vor irgendwelchen beweglichen Teilen zu schützen, und mit durchschneidenden Mitteln für das Durchschneiden der Artikel stromaufwärts von den trennenden Mitteln.

11. Apparat nach Anspruch 10, worin der Sicherheitsdeckel einen zylindrischen Körper umfaßt, der eine Öffnung (32) aufweist, durch die die Zellstoff-Artikel eingeführt werden; welcher zylindrische Körper an einem Pedal (33, 133) durch Verbindungs-, Hebungs- und Drehungsmittel (34, 35) befestigt ist, die den Deckel heben, um die Einführung des Zellstoff-Artikels in die Öffnung zu erlauben, bevor der Deckel in den Apparat zurückgezogen und gleichzeitig gedreht wird.

12. Apparat nach Anspruch 10 oder 11, worin die durchschneidenden Mittel unter den Deckel angeordnet sind und für das Übergeben der Windeln vom Deckel zum Sägriehmen einen endlosen Sägriehmen (41) und ein flexibles kegelstumpfförmiges Führungsrohr (45) umfassen, wobei das Führungsrohr eine kleinere, zum Sägriehmen gegenüberstehende Öffnung und eine größere Öffnung aufweist.

13. Apparat nach einem der Ansprüche 9 bis 12, worin die Trennungsmittel für das Ergreifen der von den Kunststoffdecken der Zellstoff-Artikel gebildeten Teile, für deren Eintauchen ins Wasser und für das Übergeben der Kunststoffdecken nach deren Trennung vom Zellstoff-Bestandteil zur weiteren Kompaktierung und Ausscheidung bewegliche Klammem (13, 51) umfassen.

14. Apparat nach einem der Ansprüche 9 bis 13, worin die Flockzellstoff-sammelnde Einheit eine drehbare zylindrische Bürste (62), einen koaxial-gespaltenen, die Bürste umfassenden Zylinder (64), und kratzende Mitteln (65) aufweist; wobei die Bürste zum Sammeln der Zellstoff-Fasern vom Wasser auf Borsten (63) der Bürste für das Eintauchen und die Drehung in der Wasser-Schüssel angepaßt ist und für die weitere Entladung der Zellstoff-Fasern aus der Wasser-Schüssel aufhebbar ist.

15. Apparat nach Anspruch 14, worin die Bürste bei zwei verschiedenen Geschwindigkeiten rotieren kann und der Durchmesser des koaxial-gespaltenen Zylinders größer ist als der Durchmesser der Bürste, so daß, wenn die Bürste langsam rotiert, während sie in der Wasser-Schüssel eingetaucht ist, die Borsten die Zellstoff-Fasern vom Wasser sammeln, und wenn die Bürste aus der Wasser-Schüssel gehoben wird und schneller rotiert, die Zellstoff-Fasern zusammen mit den Wasser-Tropfen weg von den Borsten zur inneren Oberfläche des gespaltenen Zylinders (64) hin zentrifugiert (63) werden, aus dem sie von den kratzenden Mitteln (65) danach herausgekratzt werden.

16. Apparat nach Anspruch 14 oder 15, worin die kratzenden Mittel in der Form eines zusätzlichen koaxialen, zur Einführung und Drehung im gespaltenen Zylinder angepaßten Zylinders vorliegen, der auf seiner Seitenoberfläche einen gebogenen flexiblen Streifen aufweist, welcher angepaßt ist, um zur inneren Oberfläche des gespaltenen Zylinders hin gedrückt zu werden.

17. Apparat nach einem der Ansprüche 9 bis 16, worin das Mittel zur Kompaktierung der Zellstoff-Fasern zur Kompaktierung der Flockzellstoff-fasern und zum Einstellen einer hohen Temperatur für die Desinfektion und das Trocken der Flockzellstoffs ein drehbares Schraubenversorgungsmittel (90) aufweist; wobei das Schraubenversorgungsmittel zusätzlich mit einem Heizungsmittel (96) ausgerüstet ist.

18. Apparat nach einem der Ansprüche 9 bis 17, welcher weiter ein Gebläse (21) zur Erzeugung einer Saugung für das pneumatische Übergeben der Zellstoff-Artikel und deren Bestandteile von einer Einheit zu einer anderen Einheit weiter umfasst, wobei das Gebläse mit Luft reinigenden Mitteln ausgerüstet ist.

19. Apparat nach Anspruch 9, welcher spezifisch für die ununterbrochene großtechnische Wiederverwertung von gebrauchten wegwerfbaren sanitären Artikeln aus nicht-gewebtem Zellstoff angepaßt ist, die von medizinischen, pädagogischen und karitativen Institutionen weggeworfen werden, welcher ein durchschneidendes Mittel (202) für das Teilen der Artikel in zwei Teile vor deren Trennung im Trennungsmittel (214) und ein Versorgungsmittel (204) zum ununterbrochenen Durchgang der Zellstoff-Artikel durch das durchschneidende Mittel weiter umfasst.

20. Apparat nach Anspruch 19, worin das Versorgungsmittel für das Lagern der Windeln einen Trichter (206) umfaßt, der an seinem niedrigeren Ende in eine, mit Vorschubsmitteln (210A, 210B) ausgerüstete und zum durchschneidenden Mittel (202) führende Leitung (208) mündet, die sich danach in ein Paar Rohre (212A, 212B) verzweigt, die an ihren niedrigeren Enden für die Zuführ der durchgeschnittenen Artikel zu den trennenden Mitteln (214) geöffnet sind.

21. Apparat nach Anspruch 20, worin das Vorschubsmittel aus einem Paar zusammenarbeitender benachbarter Rollen (210A, 210B, 211) besteht, die in der Leitung nebeneinander angeordnet sind und in entgegengesetzten Richtungen rotieren, um einen Artikel nach dem anderen nach unten zu schieben.

22. Apparat nach Anspruch 20 oder 21, worin die Leitung (208) für die Anpassung ihres Querschnitts zur Größe der durch sie beförderten Artikel mit Mitteln (220) ausgerüstet ist, um die Artikel auf den durchschneidenden Mittel (202) zu zentrieren, damit sie in zwei im wesentlichen gleiche Teile geteilt werden.

23. Apparat nach einem der Ansprüche 19 bis 22, worin das durchschneidende Mittel (202) ein Paar von eng benachbarten parallelen beweglichen Klingen umfaßt, die zur Durchführung gegenseitiger Bewegungen in entgegengesetzten Richtungen angepasst sind und kontinuierlich mit Wasser bespritzt werden.

24. Apparat nach einem der Ansprüche 20 bis 22, worin die Rohre an ihren niedrigeren Öffnungen Blattfeder (222) aufweisen, damit die durchgeschnittenen Artikel aus den Rohren nicht herausfallen.

25. Apparat nach einem der Ansprüche 19 bis 24, worin das Trennungsmittel ein karussellförmiges, waagerecht rotierbares Glied (218), das unter den niedrigeren Öffnungen der Rohren und über der Wasseroberfläche in der Wasser-Schüssel angeordnet ist und von der Wasseroberfläche durch einen kleineren Abstand als die minimale Länge eines durchgeschnittenen Artikels getrennt ist, aufweist, wobei das karussellförmige Glied wechselseitig entlang verschiedenen Winkeln und bei verschiedenen Geschwindigkeiten gemäß vorbestimmten Regimen rotierbar ist und eine Mehrzahl radialer Balken (217) umfasst, wovon jeder an seinem äußeren Ende mit ergreifenden Mitteln (219) ausgerüstet ist, um die durchgeschnittenen Artikel aus den Röhren herauszunehmen, wenn das karussellförmige Glied in einem der vorbestimmten Regimen rotiert; und die Wasser-Schüssel mit einer ersten, in der Höhe des karussellförmigen Gliedes (218) liegenden Abfluß-Leitung (224), um aus dieser die Kunststoffdecken der durchgeschnittenen Artikel zu entfernen, und mit einer zweiten Abfluß-Leitung (226), um aus der Wasser-Schüssel das Wasser zusammen mit der Ausströmung und den in dieser zerfallenen Zellstoff-Fasern zu entfernen und zu den sammelnden Mitteln zu übergeben, ausgerüstet ist.

26. Apparat nach Anspruch 25, welcher über dem karussellförmigen rotierbaren Körner liegende und für das Besprühen mit Wasser oder einer desinfizierender Lösung angepaßte Sprühmittel (228) aufweist.

27. Apparat nach einem der Ansprüche 9 bis 26, worin die sammelnden Mittel (400) ein zylindrisches Reservoir (402) aufweisen, das mit einem, eine rauhe innere Oberfläche aufweisenden, koaxialen inneren zylindrischen Schirm (404) ausgerüstet ist, der wechselseitig in entgegengesetzten Richtungen entlang verschiedenen Winkeln und bei verschiedenen Geschwindigkeiten gemäß vorbestimmten Regimen rotierbar ist, wobei der zylindrische Schirm das Sammeln der zerfallenen Zellstoff-Fasern auf seiner rauhen inneren Oberfläche aus dem Wasser, das sie zusammen mit dem superabsorbierenden Polymer enthält, während der langsamen Drehung des Schirmes ermöglicht; das Reservoir (402) eine niedrigere Abfluß-Leitung (406) für das Entfernen der wässerigen Ausströmung zu einem Abwasserkanal, und eine obere tangentiale Abfluß-Leitung (408) auf der Höhe des oberen, nach außen hin erweiterten Randes (410) des Schirms aufweist; wobei der Apparat, um die gesammelten Zellstoff-Fasern von der rauhen inneren Oberfläche des zylindrischen Bildschirmes zu seinem oberen, nach außen hin erweiterten Rand abzukratzen, während der schnellen Drehung des Schirmes zur Entfernung der Fasern durch Saugen über die tangentiale Leitung (408) eine gebogene Spachtel (412) weiter umfasst.

28. Apparat nach Anspruch 27, welcher wenigstens eine, über dem zylindrischen Schirm angeordnete Besprühungsvorrichtung (412) für das intermittierende Waschen der auf der rauhen Oberfläche des Schirmes gesammelten Zellstoff-Fasern weiter umfasst.

29. Apparat nach Anspruch 27 oder 28, mit einer aufwärts angeordneten vorläufigen sammelnden Einheit (300), die einen Behälter mit die zerfallenen Zellstoff-Fasern und die Ausströmung enthaltendem Wasser aufweist, wobei der Behälter mit einem, eine rauhe Oberfläche aufweisenden und wenigstens teilweise im Wasser eintauchenden Körner (304) ausgerüstet ist, der Körper bei zwei verschiedenen Geschwindigkeiten um eine waagerechte Achse rotierbar ist, um die Zellstoff-Fasern vom Wasser auf die rauhe Oberfläche während einer langsameren Drehung des Körpers zu sammeln oder um die gesammelten Fasern tangential von dort während einer schnelleren Drehung des Körpers wegzuwerfen, nachdem das Wasser mit der Ausströmung aus dem Behälter schon gespült worden ist.

30. Apparat nach einem der Ansprüche 9 bis 29, welcher Mittel, die dazu angepaßt sind, einen verringerten Luftdruck an gesamten Eintritts- und Austrittsöffnungen des Apparates zu erzeugen, weiter umfasst, um das Entweichen unangenehmer Gerüche von dort zu verhindern.

## Revendications

1. Procédé pour récupérer un composant bourre de cellulose d'articles sanitaires jetables usagés en cellulose non tissée, ayant aussi un composant matières synthétiques et un composant polymère superabsorbant, ledit procédé comprenant:
la séparation dudit composant bourre de cellulose dudit composant matières synthétiques pour fournir un courant contenant des matières synthétiques et un courant contenant de la cellulose, caractérisé en ce qu'il comprend en outre:
la désagrégation dudit composant bourre de cellulose dans l'eau en fibres de cellulose, et la séparation desdites fibres de cellulose de l'eau et du composant polymère superabsorbant et des autres déchets contenus, en collectant sélectivement lesdites fibres de cellulose sur une surface rugueuse;
la mise en place dudit composant polymère superabsorbant et desdits déchets dans l'eau, comme effluent;
le compactage desdites fibres de cellulose séparées avant leur évacuation, et
le compactage dudit composant matières synthétiques séparé avant son évacuation.

2. Procédé selon la revendication 1 où lesdits articles sanitaires jetables en cellulose non tissée sont des couches.

3. Procédé selon la revendication 1 ou 2 où lesdits articles sont tranchés de préférence en deux parties, lesdites parties sont saisies par des moyens de préhension mobiles (13, 51) et humidifiées par immersion répétée dans l'eau avec séparation consécutive du composant bourre de cellulose, qui contient le composant polymère superabsorbant, du composant matières synthétiques desdites couches et désagrégation supplémentaire dudit composant bourre de cellulose dans l'eau en lesdites fibres de cellulose.

4. Procédé selon la revendication 3 où ladite immersion répétée des articles fendus dans l'eau est accomplie par une rotation réciproque desdites couches fendues qui sont au moins à moitié immergées dans l'eau, suivant un domaine angulaire prédéterminé d'une trajectoire circulaire horizontale.

5. Procédé selon la revendication 4 où une pluralité des articles fendus est d'abord saisie et déplacée le long de ladite trajectoire circulaire à une faible vitesse dans un sens, puis les couches fendues sont plongées dans de l'eau en étant déplacées tour à tour dans des sens opposés à une grande vitesse suivant un angle de 45° à 90°, après quoi les couvertures en matières synthétiques sont libérées, déplacées à une grande vitesse dans un sens, et retirées tangentiellement par aspiration pour leur compactage.

6. Procédé selon l'une quelconque des revendications 1 à 5, où ledit compactage desdites fibres de cellulose séparées comprend la compression et le séchage et la désinfection simultanés desdites fibres par chauffage.

7. Procédé selon l'une quelconque des revendications 1 à 6 où ledit composant matières synthétiques est compacté par fusion et refroidissement subséquent.

8. Procédé selon l'une quelconque des revendications 1 à 6 où ledit composant matières synthétiques est compacté par compression et chauffage à sa température de ramollissement.

9. Appareil pour récupérer un composant bouffe de cellulose d'articles sanitaires jetables usagés en cellulose non tissée ayant aussi un composant matières synthétiques et un composant polymère superabsorbant, ledit appareil comprenant:
des moyens de séparation (12, 13, 14, 51, 214) pour séparer ledit composant bouffe de cellulose qui contient ledit composant polymère superabsorbant, dudit composant matières synthétiques;
caractérisé en ce qu'il comprend en outre:
des moyens de désagrégation comprenant un bassin d'eau (14, 61, 216), pour désagréger le composant bourre de cellulose ainsi séparé en fibres de cellulose, gel de polymère superabsorbant et déchets, et pour disperser lesdites fibres dans l'eau;
des moyens collecteurs (18, 18A, 300, 400) comprenant un élément (304, 404) ayant une surface rugueuse pour collecter sélectivement sur lui lesdites fibres de cellulose depuis leur dispersion aqueuse;
des moyens de compactage (19, 19A) pour compacter lesdites fibres de cellulose collectées par lesdits moyens collecteurs;
des moyens de compactage (17, 19A) pour compacter ledit composant matières synthétiques, et des moyens d'élimination pour le retrait de l'eau qui contient ledit gel de polymère superabsorbant et les déchets dudit bassin d'eau.

10. Appareil selon la revendication 9, spécifiquement adapté pour le recyclage à petite échelle d'articles sanitaires usagés en cellulose non tissée, comprenant un couvercle de sécurité (11, 111) pour introduire lesdits articles en cellulose dans l'appareil pour protéger la main de l'utilisateur contre toute partie mobile, et des moyens de tranchage pour trancher lesdits articles en amont desdits moyens de séparation.

11. Appareil selon la revendication 10 où ledit couvercle de sécurité comprend un corps cylindrique qui a un orifice (32) par lequel lesdits articles en cellulose sont introduits; lequel corps cylindrique est fixé à une pédale (33, 133) par des moyens de liaison, de soulévement et de rotation (34, 35) pour amener ledit couvercle à se soulever de manière à permettre l'introduction de l'article en cellulose dans ledit orifice, après quoi le couvercle est rétracté dans l'appareil et est amené à tourner simultanément.

12. Appareil selon la revendication 10 ou 11 où lesdits moyens de tranchage sont placés sous ledit couvercle et comprennent une courroie de scie sans fin (41) et un tube de guidage tronconique flexible (45) pour transférer lesdites couches dudit couvercle vers ladite courroie de scie, ledit tube de guidage ayant un plus petit orifice et un plus grand orifice, ledit plus petit orifice faisant face à ladite courroie de scie.

13. Appareil selon l'une quelconque des revendications 9 à 12 où lesdits moyens de séparation comprennent des pinces mobiles (13, 51) pour saisir les parties formées par les couvertures en matières synthétiques desdits articles en cellulose, pour les plonger dans l'eau et transférer les couvertures en matières synthétiques après leur séparation du composant cellulose, pour les compacter encore et les évacuer.

14. Appareil selon l'une quelconque des revendications 9 à 13, où l'unité de collecte de bourre de cellulose comprend une brosse cylindrique rotative (62), un cylindre fendu coaxial (64) entourant ladite brosse, et des moyens de raclage (65); ladite brosse étant adaptée pour l'immersion et la rotation dans ledit bassin d'eau (61) pour rassembler lesdites fibres de cellulose de l'eau sur les soies (63) de la brosse, ladite brosse pouvant être relevée dudit bassin d'eau pour en retirer encore lesdites fibres de cellulose.

15. Appareil selon la revendication 14 où ladite brosse est capable de tourner à deux vitesses différentes; et ledit cylindre fendu coaxial a un diamètre plus grand que le diamètre de ladite brosse, de sorte que, quand ladite brosse tourne lentement en étant immergée dans ledit bassin d'eau, lesdites soies rassemblent lesdites fibres de cellulose depuis ladite eau, et quand la brosse est soulevée depuis ledit bassin d'eau et est amenée à tourner plus vite, lesdites fibres de cellulose avec les gouttes d'eau sont centrifugées loin desdites soies (63) vers la surface interne dudit cylindre fendu (64) d'où elles sont ensuite retirées par raclage par lesdits moyens de raclage (65).

16. Appareil selon la revendication 14 ou 15 où lesdits moyens de raclage sont sous forme d'un cylindre coaxial supplémentaire adapté pour être introduit et amené à tourner dans ledit cylindre fendu, et muni sur sa surface latérale d'une bande flexible courbée adaptée pour être pressée vers la surface interne dudit cylindre fendu.

17. Appareil selon l'une quelconque des revendications 9 à 16 où lesdits moyens de compactage desdites fibres de cellulose comprennent un moyen formant alimentateur à vis rotatif (90) pour compacter lesdites fibres de cellulose et créer une température élevée pour réaliser la désinfection et le séchage de ladite bourre de cellulose; ledit alimentateur à vis rotatif étant muni en outre de moyens chauffants (96).

18. Appareil selon l'une quelconque des revendications 9 à 17 comprenant en outre un moyen formant ventilateur (21) pour créer une aspiration pour le transfert pneumatique desdits articles en cellulose et de leurs composants d'une desdites unités à une autre, ledit ventilateur étant muni de moyens purifiant l'air.

19. Appareil selon la revendication 9 spécifiquement adapté au recyclage continu à grande échelle d'articles sanitaires jetables usagés en cellulose non tissée jetés par des institutions médicales, pédagogiques et de bienfaisance, comprenant en outre un moyen de tranchage (202) pour fendre lesdits articles en deux parties avant leur séparation dans ledit moyen de séparation (214), et un alimentateur (204) pour faire passer en continu lesdits articles en cellulose dans ledit moyen de tranchage.

20. Appareil selon la revendication 19 où ledit alimentateur comprend une trémie (206) pour stocker les couches qui aboutit à son extrémité inférieure dans un conduit (208) muni d'un moyen faisant avancer la charge (210A, 210B), et menant audit moyen de tranchage (202), ledit conduit se ramifiant ensuite en une paire de tubes (212A, 212B) ouverts à leurs extrémités inférieures pour envoyer lesdits articles fendus audit moyen de séparation (214).

21. Appareil selon la revendication 20, où ledit moyen faisant avancer la charge consiste en une paire de rouleaux adjacents coopérants (210A, 210B, 211) montés dans ledit conduit côte à côte et tournant dans des sens opposés, de manière à pousser lesdits articles l'un après l'autre vers le bas.

22. Appareil selon la revendication 20 ou 21, où ledit conduit (208) est muni d'un moyen (220) pour ajuster sa section transversale à la dimension des articles transportés par lui pour centrer lesdits articles sur ledit moyen de tranchage (202) pour leur permettre d'être fendus en deux parties sensiblement égales.

23. Appareil selon l'une quelconque des revendications 19 à 22, où ledit moyen de tranchage (202) comprend une paire de lames mobiles parallèles étroitement adjacentes adaptées pour décrire des mouvements réciproques dans des directions opposées et aspergées d'eau de façon continue.

24. Appareil selon l'une quelconque des revendications 20 à 22, où lesdits tubes sont munis à leurs ouvertures inférieures de ressorts à lames (222) pour empêcher lesdits articles fendus de tomber desdits tubes.

25. Appareil selon l'une quelconque des revendications 19 à 24, où ledit moyen de séparation comprend un élément rotatif horizontalement (218), analogue à un carrousel, placé sous les ouvertures inférieures desdits tubes et au-dessus de la surface de l'eau dans ledit bassin d'eau, et séparé de la surface de l'eau par une distance inférieure à la longueur minimale d'un article fendu, ledit élément analogue à un carrousel pouvant tourner dans un sens et dans l'autre suivant différents angles et à différentes vitesses selon des régimes prédéterminés, et comprend une pluralité de poutres radiales (217) munies chacune à leur extrémité externe de moyens de préhension (219) conçus pour extraire les articles fendus desdits tubes quand ledit élément analogue à un carrousel tourne dans l'un des régimes prédéterminés; et ledit bassin d'eau étant muni d'un premier conduit de sortie (224) au niveau dudit élément analogue à un carrousel (218) pour le retrait de celui-ci des couvertures en matières synthétiques desdits articles fendus, et d'un deuxième conduit de sortie (226) pour retirer dudit bassin d'eau l'eau ainsi que l'effluent et les fibres de cellulose désagrégées et les envoyer vers ledit moyen collecteur.

26. Appareil selon la revendications 25, muni en outre d'un moyen d'aspersion d'eau (228) placé au-dessus dudit corps rotatif analogue à un carrousel et adapté pour injecter de l'eau ou une solution de désinfectant.

27. Appareil selon l'une quelconque des revendications 9 à 26, où le moyen collecteur (400) comprend un réservoir cylindrique (402) muni d'un écran cylindrique interne coaxial (404), ayant une surface interne rugueuse, pouvant tourner dans un sens et dans l'autre dans des sens opposés suivant différents angles et à différentes vitesses selon des régimes prédéterminés, ledit écran cylindrique servant à collecter sur sa surface interne rugueuse les fibres de cellulose désagrégées depuis l'eau qui les contient ainsi que le polymère superabsorbant, pendant la rotation lente dudit écran; ledit réservoir (402) étant muni d'un tube de sortie inférieur (406) pour retirer l'effluent aqueux vers un égout, et un tube de sortie tangentiel supérieur (408) placé au niveau du bord supérieur (410) dudit écran qui est évasé extérieurement; ledit appareil étant équipé en outre d'un racloir courbé (412) adapté pour racler les fibres de cellulose collectées depuis la surface interne rugueuse dudit écran cylindrique vers son bord supérieur évasé pendant la rotation rapide de l'écran, pour le retrait des fibres par aspiration par ledit tube tangentiel (408).

28. Appareil selon la revendication 27, muni en outre d'au moins un appareil d'arrosage d'eau (412) placé au-dessus dudit écran cylindrique pour le lavage intermittent des fibres de cellulose collectées sur la surface rugueuse dudit écran.

29. Appareil selon la revendication 27 ou 28, précédé par une unité collectrice préliminaire (300) comprenant un récipient (302) avec de l'eau qui contient lesdites fibres de cellulose désagrégées et l'effluent, ledit récipient étant muni d'un corps (304) ayant une surface rugueuse et étant au moins partiellement immergé dans l'eau, ledit corps pouvant tourner à deux vitesses différentes autour d'un axe horizontal, de manière à collecter lesdites fibres de cellulose de l'eau sur ladite surface rugueuse pendant une rotation plus lente dudit corps ou à en rejeter tangentiellement les fibres collectées pendant une rotation plus rapide du corps, après que l'eau avec l'effluent ait déjà été éliminée du récipient.

30. Appareil selon l'une quelconque des revendications 9 à 29, muni en outre de moyens conçus pour appliquer une pression d'air réduite à toutes les ouvertures d'entrée et de sortie de l'appareil pour empêcher des odeurs désagréables de s'en échapper.
